# EUROPÄISCHE PATENTSCHRIFT

(11) **EP 1 597 118 B1**
(45) Veröffentlichungstag und Bekanntmachung des Hinweises auf die Patenterteilung: **23.08.2006**
(21) Anmeldenummer: 03773551.1
(22) Anmeldetag: 18.10.2003
(51) Int. Cl.: B60R 21/01

(54) **VORRICHTUNG ZUR ERKENNUNG EINER HINDERNISUNTERFAHRT**
DEVICE FOR RECOGNISING AN OBSTACLE UNERDERRIDE
DISPOSITIF PERMETTANT DE DETECTER UN DANGER D'ENCASTREMENT

(30) Priorität: 21.02.2003 DE 10307463
(43) Veröffentlichungstag der Anmeldung: 23.11.2005
(73) Patentinhaber: ROBERT BOSCH GMBH, 70442 Stuttgart (DE)
(72) Erfinder: LICH, Thomas, 71409 Schwaikheim (DE)
(86) Internationale Anmeldenummer: PCT/DE2003/003500
(87) Internationale Veröffentlichungsnummer: WO 2004/076240

(56) Entgegenhaltungen:
- EP-A- 0 557 733
- WO-A-01/59473
- DE-A- 19 522 345
- US-A- 5 507 546

## Beschreibung

### Stand der Technik

Die Erfindung geht aus von einer Vorrichtung zur Erkennung einer Hindernisunterfahrt nach der Gattung des unabhängigen Patentanspruchs.

Aus US-A-5,507,546 ist ein Unterfahrschutz für einen Lkw bekannt. Nachteilig an einem solchen Unterfahrschutz ist, dass dieser als eine zusätzliche Gewichtsbelastung für den Lkw wirkt. Damit kann weniger Gütermasse transportiert werden.

### Vorteile der Erfindung

Die erfindungsgemäße Vorrichtung zur Erkennung einer Hindernisunterfahrt mit den Merkmalen des unabhängigen Patentanspruchs hat demgegenüber den Vorteil, dass nunmehr durch das Fahrzeug selbst, das die Hindernisunterdurchfahrt begeht, mittels einer Abstandssensorik diese Hindernisunterfahrt frühzeitig erkannt wird. Damit können bereits sehr früh Schutzmaßnahmen wegen der gefährlichen Hindernisunterfahrt eingeleitet werden. Die Abstandsmessung braucht dabei nur im Wesentlichen vertikal ausgerichtet zu sein. Ebenfalls ist eine Ausrichtung sowohl in horizontaler als auch in vertikaler Richtung möglich oder aber in einem beliebigen Winkel zwischen der Horizontalen oder der Vertikalen, also geneigt. Darüber hinaus könnten dann Vorrichtungen zum Unterfahrschutz bei Lkws entfallen, sodass hier die Gewichtsbelastung entfällt.

Durch die in den abhängigen Ansprüchen aufgeführten Maßnahmen und Weiterbildungen sind vorteilhafte Verbesserungen der im unabhängigen Patentanspruch angegebenen Vorrichtung zur Erkennung einer Hindernisunterfahrt möglich.

Besonders vorteilhaft ist, dass die vertikale Abstandsmessung wenigstens eine Sende-/Empfangsstation aufweist. Diese Sende-/Empfangsstation kann Ultraschallsensoren oder Radarsensoren aufweisen. Auch ein Lidarsystem ist hier möglich. Alternativ ist es möglich, dass ein Videosensor eingesetzt wird.

Ein wesentlicher Vorteil ist, dass die Abstandsmessung an der Stoßstange angeordnet ist. Dies ist der äußerste Teil, sodass sehr frühzeitig allein durch die Anordnung der vertikalen Abstandsmessung eine Lkw-Unterfahrt oder eine andere Hindernisunterfahrt erkannt wird. Insbesondere ist es durch die Abstandsmessung möglich, zwischen einer Unterfahrt beispielsweise unter einer Brücke oder unter einem Lkw zu unterscheiden, da die Abstände entsprechend anders sind. Die Gefährdung bzw. die Auslösung von Schutzmaßnahmen für die Fahrzeuginsassen tritt erst ab einem solchen Abstand ein, der zu einer Gefährdung durch das Hindernis führen könnte. Die Abstandsmessung kann dabei vorteilhafterweise an verschiedenen, voneinander beabstandeten Orten auf der Stoßstange durchgeführt werden. Damit können Messfehler durch Plausibilisierung korrigiert werden. Auch wird hierdurch eine größere Genauigkeit erzielt.

Die erfindungsgemäße Vorrichtung ist derart mit einem Steuergerät für Rückhaltesysteme bzw. Rückhaltemittel wie beispielsweise Airbag, Gurtstraffer, Überrollbügel und dergleichen koppelbar, dass das Steuergerät die Rückhaltemittel in Abhängigkeit von einem Signal der Vorrichtung ansteuert. D.h., bei einer Hindernisunterfahrt, die ein Hindernis erkennt, das zu einer Gefährdung der Fahrzeuginsassen führen könnte, kommt es zu einer entsprechenden Ansteuerung der Rückhaltemittel, die den entsprechenden Schutz bieten.

Die erfindungsgemäße Vorrichtung kann insbesondere auch zur Fußgängersensierung konfiguriert sein. Hierzu ist die erfindungsgemäße Vorrichtung mit anderen Sensoren im Bereich der Frontpartie eines Fahrzeugs zu koppeln. Da hier vorwiegend Kontaktsensoren eingesetzt werden oder aber sogenannte vorausschauende Sensoren (PreCrash-Sensoren) besteht die Notwendigkeit eine eineindeutige Zuordnung zu einem Fußgängerunfall zu bekommen. Durch die erfindungsgemäße Vorrichtung entsteht hieraus der Vorteil, ein angefahrenes Hindernis, wie z.B. Stossstange eines anderen Fahrzeugs, Parkpfosten o.ä. von einem Fußgänger zu separieren, also eine deutliche Reduzierung von Misuse-Fällen und somit zu unnötigen Reperaturkosten. Da die erfindungsgemäße Vorrichtung ebenfalls im Bereich der Stoßstange integriert werden kann, ensteht hieraus ein Mehrnutzen und somit eine deutliche Kostenreduzierung bei erhöhter Funktionalität, da bestehende Steuergeräte für die Datenerfassung herangezogen werden können und eine Auswertung ggf. stattfinden kann.

Im weiteren ergibt sich daraus der Vorteil, daß ein frühstmöglichster Zeitpunkt für die Aktivierung der Schutzmechanismen für den Fußgänger aktiviert werden kann, da die Stossstange ein erster Kontaktpunkt zum Objekt darstellt.

Die Abstandsmessung kann vorzugsweise auch oder zusätzlich in der Heckstoßstange angeordnet sein, um auch eine LKW-Unterfahrt durch eine Rückwärtsfahrt zu erkennen.

### Zeichnung

Ausführungsbeispiele der Erfindung sind in der Zeichnung dargestellt und werden in der nachfolgenden Beschreibung näher erläutert.

Es zeigen Figur 1 eine Aufsicht auf die erfindungsgemäße Vorrichtung, Figur 2 eine Seitenansicht der erfindungsgemäßen Vorrichtung und Figur 3 ein Flussdiagramm für ein mögliches Verfahren im Steuergerät des Rückhaltesystems.

### Beschreibung

Derzeit wird bereits in einigen Fahrzeugen eine Vielzahl von Rückhaltesystemen eingesetzt, die den Schutz der Insassen bei einem Unfall ermöglichen sollen. Vorwiegend sind hier Fahrzeug-Fahrzeug-Unfälle, Überrollvorgänge, Seiten-Crashes und andere Unfallsituationen abgedeckt. Eine Vielzahl von Sensoren findet hierfür Anwendung, um solche Unfälle zu erkennen. Die Sensoren sind im Wesentlichen dafür konfiguriert, dass sie kinematische Größen wie die Beschleunigung erfassen. Bei einer zu hohen Beschleunigung oder einer zu hohen Geschwindigkeit werden entsprechende Zündmittel gezündet. Aber auch Precrash-Systeme sind bereits bekannt. Dabei erfasst beispielsweise ein Radarsensor, der in der Stoßstange in horizontaler Richtung verbaut ist, die Umgebung und soll zukünftige Unfallsituationen erkennen, wobei in Abhängigkeit vom Signal eines solchen Precrash-Sensors Rückhaltesysteme angesteuert werden.

Ein anderes, weniger sicherheitskritisches System basiert auf der Ultraschallsensorik, die für eine Einparkhilfe verwendet wird. Solche sogenannten "Parksensoren" unterstützen den Fahrer beim Einparkvorgang und geben ein Warnsignal bei einem zu knappen Abstand zu benachbarten Fahrzeugen oder anderen Hindernissen aus. Die Reichweite dieser Sensoren liegt bei 70 cm bis 1 m. Ein zukünftiges Ziel des passiven Schutzes ist der Ausbau des Fußgängerschutzes. Einige Strategien zum Fußgängerschutz wurden bereits genannt, wobei vorwiegend kontaktbasierte Sensoren im Bereich der Stoßstange eingesetzt werden. Aber auch radarbasierte Sensoren und andere Precrash-Sensoren können hier verwendet werden.

Nachteilig ist jedoch, dass die genannten Sensoren keinerlei Wirkung bei sogenannten "Lkw-Unterfahrten" haben. Der Airbag ist hier meist wirkungslos, da zum einen der Masseunterschied extrem hoch ist und zum anderen wirken in diesen Situationen keine klassischen Rückhaltemittel wie Airbag oder Gurtstraffer. Die Gründe hierfür sind in den fehlenden Knautschzonen bei einem Lkw und die mangelhafte Übereinstimmung der Fahrzeugkonturen zu sehen. Bei einem Heckaufprall unterfährt der Pkw mit seinem Frontbereich den Heckteil des Lkws. Bei Pkw-Pkw-Unfällen würde der Crash bei der Stoßstange beginnen, jedoch nicht bei solchen Unterfahr-Crashes. Hier kommt der Erstkontakt mit dem Lkw in der Regel erst mit der Motorhaube. Damit ist eine sichere Auslösung der Rückhaltemittel nicht mehr zeitlich machbar bzw. die entsprechende Sensorik liefert hierfür unzureichende Signale.

Das Risiko, getötet zu werden, ist bei der Kollision eines Pkw mit einem Lkw dreimal so hoch wie bei einem Pkw-Pkw-Crash. Dabei kommen zwei Drittel der getöteten Pkw-Insassen bei Frontalzusammenstößen mit der Lkw-Front ums Leben.

Erfindungsgemäß wird daher vorgeschlagen, ein weiteres Eingabesignal für Rückhaltemittel zu erzeugen, das die generelle Unterfahrsensierung beinhalten soll. Dabei wird eine Abstandsmessung vorgeschlagen, die vertikal ausgerichtet ist, um eine solche Lkw-Unterfahrt zu erkennen. Dafür können Ultraschallsensoren oder auch radarbasierte Sensoren eingesetzt werden. Vorzugsweise sollen diese Sensoren im Bereich der Stoßstange angeordnet werden. Es erfolgt also eine Abstandsmessung in z-Richtung. Die erfindungsgemäße Vorrichtung soll derart gestaltet sein, dass sie möglichst über die gesamte Stoßstange sensiert, um auch bei einer schiefen Lkw-Unterfahrt eine möglichst frühzeitige Erkennung dieser Unterfahrt zu ermöglichen. Üblicherweise wird nun die Abstandsmessung, also die entsprechenden Sensoren, in vertikaler Lage verbaut. Dies hat zur Folge, dass die Sensierung in z-Richtung möglich ist. Bei normaler Fahrt ist in der Regel kein Hindernis im Bereich der Stoßstange zu erfassen, sodass die Sensoren vorwiegend Nullsignale liefern. Sollte ein Hindernis oder ein Lkw in diesen Bereich kommen, so liefert der Sensor ein von Null unterschiedliches Signal. In Kombination mit weiteren Signalen von anderen Sensoren kann dann eindeutig festgelegt werden, welche entsprechenden Rückhaltemittel zu zünden sind. Die Verarbeitung geschieht vorzugsweise in einem Steuergerät, eine mögliche Auswertung ist jedenfalls auch in einem vom Zentralairbag verschiedenen Steuergerät möglich. Im Steuergerät eingelesene Signale werden dann in einem Algorithmus entsprechend verarbeitet und entscheiden dann, welche Schutzmechanismen aktiviert werden sollen.

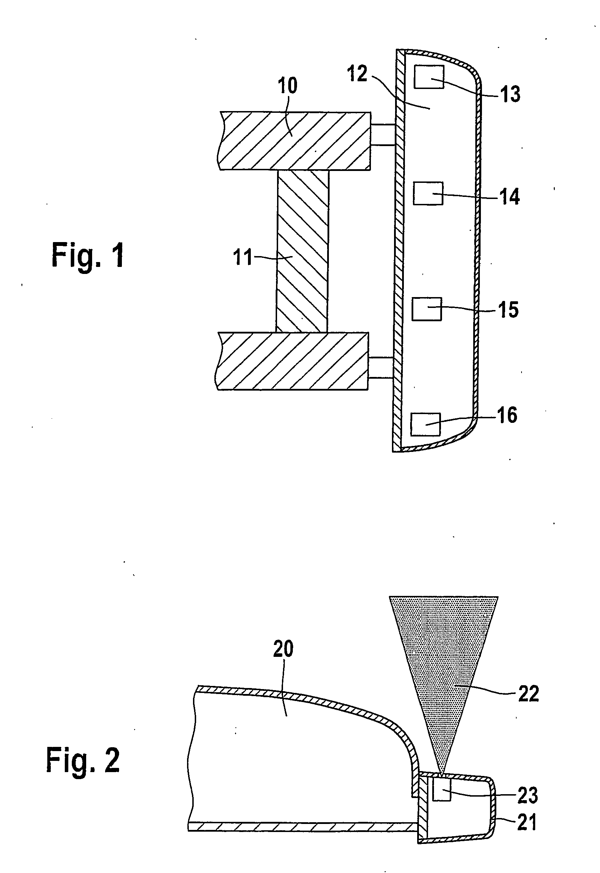

Figur 1 zeigt eine Aufsicht auf die erfindungsgemäße Vorrichtung. Eine Stoßstange 12 ist an einen Längsträger 10 an beiden Seiten einer Karosserie befestigt. Die Längsträger sind durch einen Querträger 11 miteinander verbunden. Die Stoßstange 12 weist vier vertikal ausgerichtete Abstandsmessvorrichtungen 13 bis 16 auf. Diese Abstandsmessvorrichtungen sind hier radarbasiert. Alternativ ist es möglich, auch Ultraschallsensoren, Lidar- oder Videosensoren, die zur Entfernungsmessung konfiguriert sind, einzusetzen. Hier sind vier Sensoren eingesetzt. Dies ermöglicht eine besonders große Abdeckung bei der Abstandsmessung.

Figur 2 zeigt eine Seitenansicht der erfindungsgemäßen Vorrichtung. Eine Stoßstange 21 ist an dem Fahrzeug 20 befestigt. Die Sensoren 23, wobei hier nur einer zu sehen ist, weisen eine Sensierungsumgebung 22 nach oben auf. Die Abstandsmessung selbst läuft nach den bekannten Verfahren bei Radarsystemen.

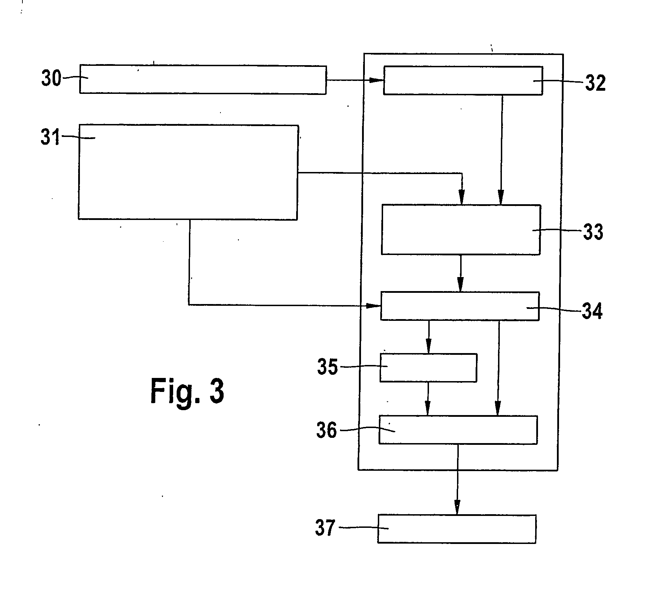

Figur 3 zeigt in einem Flussdiagramm, wie die Sensordaten der erfindungsgemäßen Abstandssensorik in einen Auslösealgorithmus Eingang finden. In Verfahrensschritt 30 werden die Stoßstangensensoren ausgelesen und in Verfahrensschritt 32 werden diese Daten verarbeitet und erfasst. Die Daten werden dann in Verfahrensschritt 33 dem Auslösealgorithmus zugeführt. In den Auslösealgorithmus gehen auch weitere Sensorsignale, die in Verfahrensschritt 31 gewonnen wurden, ein. Dazu zählen Signale von Precrash-Sensoren, Beschleunigungssensoren und weiteren Sensoren wie beispielsweise Fußgängersensoren oder andere Verformungssensoren. Der Algorithmus führt dann in Verfahrensschritt 33 das Verfahren durch und bildet gegebenenfalls eine Auslöseentscheidung. Diese Auslöseentscheidung wird in Verfahrensschritt 34 plausibilisiert, wobei auch hier Sensorsignale aus Verfahrensschritt 31 verwendet werden. In Verfahrensschritt 35 erfolgt eine Korrektur in Abhängigkeit von Plausibilierung, wobei in Verfahrensschritt 36 in einer Logik das Auslösesignal mit den plausibilisierten Signalen verknüpft wird. Dies führt dann gegebenenfalls zur Auslösung der Rückhaltesysteme in Verfahrensschritt 37.

## Patentansprüche

1. Vorrichtung zur Erkennung einer Hindernisunterfahrt, wobei die Vorrichtung in einer Fahrzeugfront derart angeordnet ist, dass die Vorrichtung mittels einer vertikalen Abstandsmessung (13 -16) eine Hindernisunterfahrt erkennt.

2. Vorrichtung nach Anspruch 1, **dadurch gekennzeichnet, dass** die vertikale Abstandsmessung (13 - 16) wenigstens eine Sende-/Empfangsstation aufweist.

3. Vorrichtung nach Anspruch 2, **dadurch gekennzeichnet, dass** die wenigstens eine Sende-/Empfangsstation als Ultraschallsensor oder Radarsensor ausgebildet ist.

4. Vorrichtung nach Anspruch 1, **dadurch gekennzeichnet, dass** die vertikale Abstandsmessung (13 -16) wenigstens einen Videosensor aufweist.

5. Vorrichtung nach einem der vorhergehenden Ansprüche, **dadurch gekennzeichnet, dass** die Abstandsmessung an der Stoßstange (12, 21) angeordnet ist.

6. Vorrichtung nach Anspruch 5, **dadurch gekennzeichnet, dass** die Abstandsmessung (13 - 16) an vier voneinander beabstandeten Orten auf der Stoßstange (12) durchgeführt wird.

7. Vorrichtung nach einem der vorhergehenden Ansprüche, **dadurch gekennzeichnet, dass** die Vorrichtung derart mit einem Steuergerät für Rückhaltemittel koppelbar ist, dass das Steuergerät die Rückhaltemittel in Abhängigkeit von einem Signal der Vorrichtung ansteuert.

8. Vorrichtung nach einem der vorhergehenden Ansprüche, **dadurch gekennzeichnet, dass** die Vorrichtung zur Fußgängersensierung konfiguriert ist.

9. Vorrichtung nach einem der vorhergehenden Ansprüche, **dadurch gekennzeichnet, dass** die Abstandsmessung (13-16) in der Heckstoßstange angeordnet ist.

## Claims

1. Device for detecting underriding by an obstacle, the device being arranged at the front of a vehicle in such a way that the device detects underriding by an obstacle by means of a vertical distance measuring means (13-16).

2. Device according to Claim 1, **characterized in that** the vertical distance measuring means (13-16) has at least one transceiver station.

3. Device according to Claim 2, **characterized in that** the at least one transceiver station is embodied as an ultrasonic sensor or radar sensor.

4. Device according to Claim 1, **characterized in that** the vertical distance measuring means (13-16) has at least one video sensor.

5. Device according to one of the preceding claims, **characterized in that** the distance measuring means is arranged on the bumper (12, 21).

6. Device according to Claim 5, **characterized in that** the distance measuring means (13-16) is implemented at four locations which are spaced apart from one another on the bumper (12).

7. Device according to one of the preceding claims, **characterized in that** the device can be coupled to a control unit for restraining means in such a way that the control unit actuates the restraining means as a function of a signal from the device.

8. Device according to one of the preceding claims, **characterized in that** the device is configured for sensing pedestrians.

9. Device according to one of the preceding claims, **characterized in that** the distance measuring means (13-16) is arranged in the rear bumper.

## Revendications

1. Dispositif permettant de détecter un danger d'encastrement, **caractérise en ce que**
le dispositif est disposé à l'avant d'un véhicule et peut détecter un danger d'encastrement au moyen d'une mesure de distance verticale (13 - 16).

2. Dispositif selon la revendication 1,
**caractérisé en ce que**
la mesure de distance verticale (13 - 16) comprend au moins une station d'émission/réception.

3. Dispositif selon la revendication 2,
**caractérisé en ce qu'**
au moins une station d'émission/réception est un détecteur d'ultrasons ou un détecteur radar.

4. Dispositif selon la revendication 1,
**caractérisé en ce que**
la mesure de distance verticale (13 - 16) comprend au moins un détecteur vidéo.

5. Dispositif selon l'une quelconque des revendications précédentes,
**caractérisé en ce que**
la mesure de distance est disposée sur le pare-chocs (12, 21).

6. Dispositif selon la revendication 5,
**caractérisé en ce que**
la mesure de distance (13 - 16) est effectuée en quatre endroits distants les uns des autres sur le pare-chocs (12).

7. Dispositif selon l'une quelconque des revendications précédentes,
**caractérisé en ce que**
le dispositif peut être couplé à un appareil de commande prévu pour des moyens de retenue, et qui active les moyens de retenue en fonction d'un signal du dispositif.

8. Dispositif selon l'une quelconque des revendications précédentes,
**caractérisé en ce que**
le dispositif permet de détecter des piétons.

9. Dispositif selon l'une quelconque des revendications précédentes,
**caractérisé en ce que**
la mesure de distance (13 - 16) est disposée dans le pare-chocs arrière.
